# EUROPEAN PATENT APPLICATION

(11) **EP 4 207 405 A1**
(43) Date of publication of application: **05.07.2023**
(21) Application number: 21861364.4
(22) Date of filing: 19.08.2021
(51) Int. Cl.: H01M 10/04, H01M 10/0587, H01M 50/107, H01M 50/119, H01M 50/528, H01M 50/533

(54) **SECONDARY BATTERY**

(30) Priority: 28.08.2020 JP 2020144931
(71) Applicant: SANYO Electric Co., Ltd., Daito-shi Osaka 574-8534 (JP)
(72) Inventor: TAKANO, Akira, Osaka-shi, Osaka 540-6207 (JP); OKUTANI, Oose, Osaka-shi, Osaka 540-6207 (JP)
(74) Representative: Novagraaf International SA
(86) International application number: PCT/JP2021/030302
(87) International publication number: WO 2022/044936

(57) **Abstract**

The purpose of the present disclosure is to provide a secondary battery capable of maintaining a favorable conduction state between a case main body and an exposed section of a negative electrode current collector. A secondary battery according to one embodiment of the present disclosure is characterized by comprising a metal case main body that has an opening, a sealing body that seals the opening of the case main body, and an electrode body that is accommodated in the case main body and formed by winding a positive electrode and negative electrode with a separator interposed therebetween, wherein: the negative electrode includes a negative electrode current collector, a negative electrode active material layer formed on the negative electrode current collector, and a negative electrode current collector exposed section where the negative electrode active material layer is not formed and the negative electrode current collector is exposed; the negative electrode current collector exposed section is disposed on a winding ending section of the electrode body and makes more than one lap circling in the winding starting direction L from the winding ending section of the electrode body, thereby forming a laminated part comprising the negative electrode exposed section, the laminated part and the case main body being welded together.

## Description

### TECHNICAL FIELD

The present disclosure relates to a secondary battery.

### BACKGROUND

A secondary battery typified by a lithium ion secondary battery is configured by, for example, housing an electrode assembly in which a positive electrode and a negative electrode are wound with a separator interposed therebetween in a case body of a battery case.

For example, Patent Literature 1 discloses a non-aqueous electrolyte secondary battery in which a case body houses an electrode assembly having an outermost peripheral surface where an exposed part is disposed in which a negative electrode current collector is exposed to bring the exposed part into direct contact with an inner surface of the case body.

### CITATION LIST

### PATENT LITERATURE

Patent Literature 1: JP 2013-254561 A

### SUMMARY

### TECHNICAL PROBLEM

The contact state between the exposed part of the negative electrode current collector and the case body depends on the state of charge of the electrode assembly, the state of deterioration due to use or aging, and the like, and a favorable conduction state between the exposed part of the negative electrode current collector and the case body may be difficult to maintain.

Therefore, an object of the present disclosure is to provide a secondary battery in which a favorable conduction state between an exposed part of a negative electrode current collector and a case body can be maintained.

### SOLUTION TO PROBLEM

A secondary battery according to an aspect of the present disclosure includes a metallic case body having an opening, a sealing assembly sealing the opening of the metallic case body, and an electrode assembly housed in the metallic case body, and the electrode assembly includes a positive electrode, a negative electrode, and a separator in which the positive electrode and the negative electrode are wound with the separator interposed between the positive electrode and the negative electrode, the negative electrode includes a negative electrode current collector and a negative electrode active material layer formed on the negative electrode current collector and has an exposed part in which the negative electrode active material layer is not formed and the negative electrode current collector is exposed, the exposed part is disposed at a winding end of the negative electrode, the electrode assembly has a stacked part in which metal foils including the exposed part are stacked, and the stacked part is welded to the metallic case body.

### ADVANTAGEOUS EFFECTS OF INVENTION

According to an aspect of the present disclosure, a secondary battery can be provided in which a favorable conduction state between an exposed part of a negative electrode current collector and a case body can be maintained.

### BRIEF DESCRIPTION OF DRAWINGS

FIG. 1 is a perspective view illustrating an appearance of a non-aqueous electrolyte secondary battery according to an embodiment.
FIG. 2 is a sectional view of the non-aqueous electrolyte secondary battery taken along the line L1-L1 in FIG. 1.
FIG. 3 is a schematic perspective view of a secondary battery illustrating a welded part between a stacked part including a negative electrode current collector exposed part and a case body.
FIG. 4 is a schematic perspective view of a secondary battery illustrating a welded part between a stacked part including a negative electrode current collector exposed part and a case body.
FIG. 5 is a schematic perspective view of a secondary battery illustrating a welded part between a stacked part including a negative electrode current collector exposed part and a case body.
FIG. 6 is a schematic perspective view of a secondary battery illustrating a welded part between a stacked part including a negative electrode current collector exposed part and a case body.
FIG. 7 is a schematic perspective view of a secondary battery illustrating a welded part between a stacked part including a negative electrode current collector exposed part and a case body.
FIG. 8 is a schematic perspective view of a secondary battery illustrating a welded part between a stacked part including a negative electrode current collector exposed part and a case body.

### DESCRIPTION OF EMBODIMENTS

In the present disclosure, the term "secondary battery" refers to an electrical storage device that can be repeatedly charged and discharged, and examples of a secondary battery include non-aqueous electrolyte secondary batteries such as lithium ion secondary batteries and aqueous secondary batteries such as alkaline secondary batteries. Hereinafter, a non-aqueous electrolyte secondary battery will be described as an example of a secondary battery according to an aspect of the present disclosure. The drawings referred to in the following description of embodiments are schematically shown, and the dimensional ratios and the like of the components drawn in the drawings may be different from real ones.

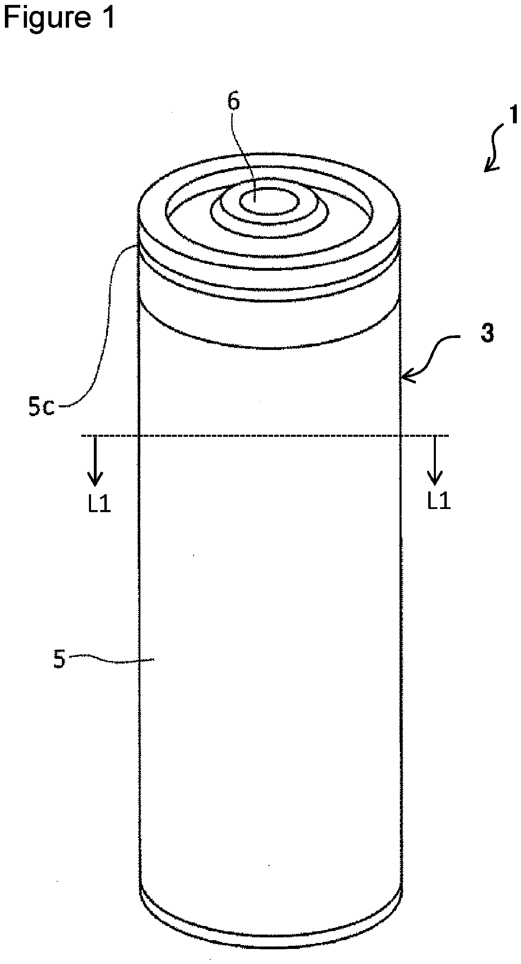

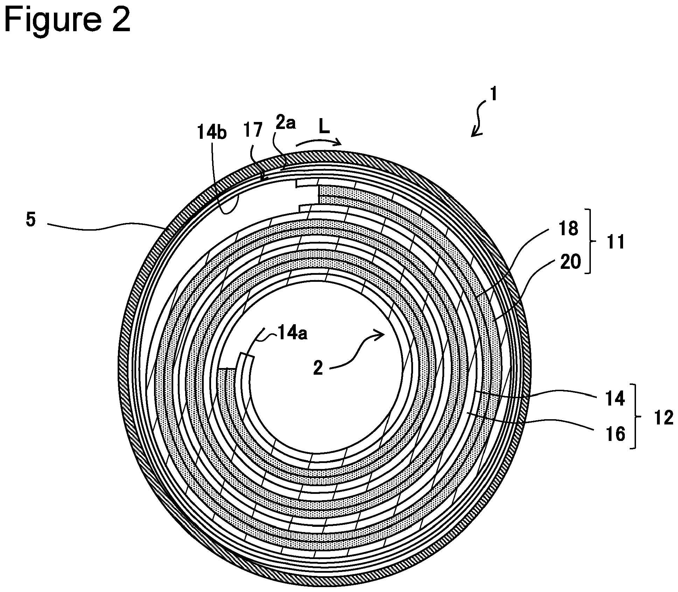

FIG. 1 is a perspective view illustrating an appearance of a non-aqueous electrolyte secondary battery according to an embodiment. FIG. 2 is a sectional view of the non-aqueous electrolyte secondary battery taken along the line L1-L1 in FIG. 1.

A non-aqueous electrolyte secondary battery 1 according to the present embodiment includes an electrode assembly 2, a non-aqueous electrolyte (not shown), and a battery case 3.

The battery case 3 includes a metallic case body 5 having an opening, and a sealing assembly 6 sealing the opening of the case body 5. The case body 5 houses the electrode assembly 2, the non-aqueous electrolyte, and the like. The case body 5 is, for example, a bottomed cylindrical metallic exterior housing can, and has an upper part in which a groove 5c is formed that protrudes inward along the circumferential direction. The sealing assembly 6 is supported by the groove 5c, and seals the opening of the case body 5. In order to ensure the sealability inside the battery, a gasket is desirably provided between the case body 5 and the sealing assembly 6.

The electrode assembly 2 illustrated in FIG. 2 is a wound electrode assembly in which a positive electrode 11 and a negative electrode 12 are wound with a separator interposed therebetween. However, FIG. 2 does not illustrate a separator disposed between the positive electrode 11 and the negative electrode 12. FIG. 2 illustrates the electrode assembly 2 having a cylindrical shape, but the shape of the electrode assembly 2 is not limited to a cylindrical shape, and may be a flat shape or the like.

The negative electrode 12 includes a negative electrode current collector 14 and a negative electrode active material layer 16 formed on the negative electrode current collector 14. The negative electrode active material layer 16 is desirably formed on both surfaces of the negative electrode current collector 14.

The negative electrode 12 has negative electrode current collector exposed parts 14a and 14b in which the negative electrode active material layer 16 is not disposed on the negative electrode current collector 14 and the negative electrode current collector 14 is exposed. The negative electrode current collector exposed part 14a is located at a winding start of the negative electrode 12, and the negative electrode current collector exposed part 14b is located at a winding end of the negative electrode 12. The negative electrode current collector exposed part 14b forms an outermost peripheral surface of the electrode assembly 2, and forms more than one turn in the direction from a winding end 2a to the winding start of the electrode assembly 2 (direction of the arrow L) to form a stacked part 17 including the negative electrode current collector exposed part 14b. At this time, a part of the negative electrode current collector exposed part 14b forming the stacked part 17 may be folded back in the direction opposite to the winding direction from the winding end of the electrode assembly 2. The stacked part 17 has a structure in which the negative electrode current collector exposed part 14b is layered in the radial direction from the outermost peripheral surface of the electrode assembly 2. The stacked part 17 including the negative electrode current collector exposed part 14b is welded to the case body 5. Examples of the method of welding the stacked part 17 to the case body 5 include a method in which the electrode assembly 2 is housed in the case body 5, and then in a state that the stacked part 17 is in contact with the inner surface of the case body 5, the case body 5 is irradiated with laser light from the outside. The welding is not particularly limited as long as the stacked part 17 can be welded to the case body 5, and examples of the welding include laser welding and electron beam welding. Laser welding is preferable from the viewpoint of workability, welding strength, and the like, and a semiconductor laser or a fiber laser is preferably used for the laser welding. A tape capable of fixing the winding end 2a can be attached to the outermost peripheral surface of the electrode assembly 2 as long as the tape does not hinder welding between the stacked part 17 and the case body 5.

The stacked part 17 including the negative electrode current collector exposed part 14b is welded to the case body 5 as described above, and thus a more favorable conduction state between the negative electrode current collector exposed part 14b and the case body 5 can be maintained than in a case where the negative electrode current collector exposed part 14b is only in contact with the case body 5. For example, the contact state between the negative electrode current collector exposed part 14b and the case body 5 is prevented from depending on the state of charge of the electrode assembly 2, deterioration due to use or aging, and the like, and thus a favorable conduction state between the negative electrode current collector exposed part 14b and the case body 5 can be maintained.

Furthermore, if the stacked part 17 including the negative electrode current collector exposed part 14b is welded to the case body 5, the following effects may be obtained. (1) For example, a favorable conduction state can be ensured without using a negative electrode tab to be attached to the negative electrode, and thus the layout of the electrode assembly can be uniform, and local stress on the electrode, performance deterioration, electrode buckling, and the like are less likely to occur. (2) For example, the electrode assembly is fixed to the case body, and thus an insulator to be disposed above and below the electrode assembly is unnecessary, displacement applied to the connecting part of the electrode tab is small, and vibration resistance is improved.

The negative electrode current collector exposed part 14b forms the outermost peripheral surface of the electrode assembly 2, and preferably forms 2 or more turns, more preferably 5 or more turns, and more preferably 10 or more turns in the direction from the winding end 2a to the winding start of the electrode assembly 2 (direction of the arrow L). Thus, for example, the stacked part 17 including the negative electrode current collector exposed part 14b can be formed over the entire circumference of the side surface of the electrode assembly 2, and the thickness of the stacked part 17 can be increased. Forming the stacked part 17 over the entire circumference of the side surface of the electrode assembly 2 increases a weldable range to facilitate a welding operation. Furthermore, an increase in the thickness of the stacked part 17 suppresses occurrence of damage to the stacked part 17 (that is, damage to the negative electrode current collector 14) at the time of welding. The thickness of the stacked part 17 is, for example, preferably 20 µm or more and 200 µm or less, and more preferably 40 µm or more and 200 µm or less, for example, from the viewpoint of suppressing occurrence of damage to the stacked part 17 at the time of welding.

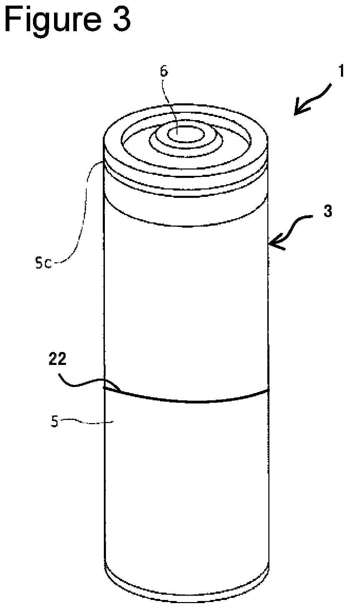

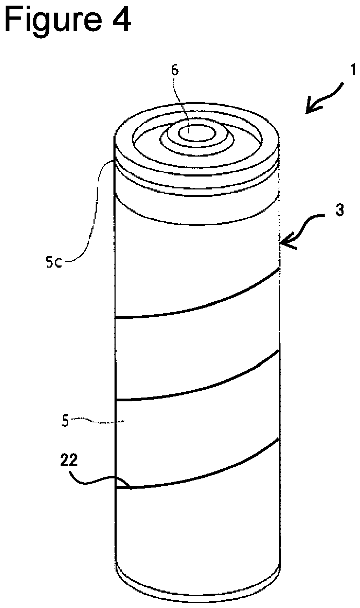

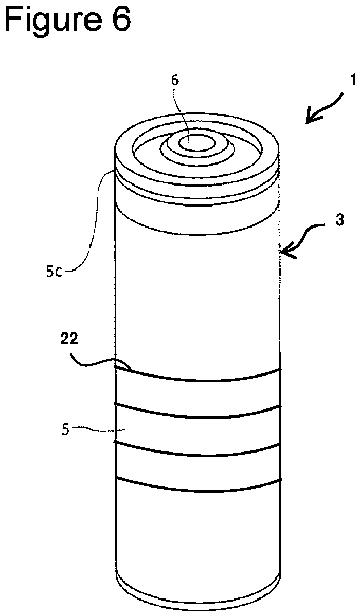

FIGS. 3 to 8 are a schematic perspective view of a secondary battery illustrating a welded part between a stacked part including a negative electrode current collector exposed part and a case body. In welding the stacked part 17 to the case body 5, for example, the case body 5 is preferably irradiated with laser light continuously over the entire circumference of the outside side surface of the case body 5 to form a welded part 22 between the stacked part 17 and the case body 5 continuously over the entire circumference of the side surface of the case body 5. Examples of the shape of the welded part 22 formed continuously over the entire circumference of the side surface of the case body 5 include annular shapes as illustrated in FIGS. 3 and 6 (in FIG. 6, a plurality of welded parts 22 having an annular shape are formed at a predetermined interval), and a spiral shape as illustrated in FIG. 4. If the welded part 22 between the stacked part 17 and the case body 5 is continuously formed over the entire circumference of the side surface of the case body 5 as described above, for example, a gas generated inside the battery case 3 is more easily discharged from the winding core part of the electrode assembly 2 than from between the electrode assembly 2 and the case body 5, and thus a risk of damaging the case body 5 due to gas generation can be suppressed.

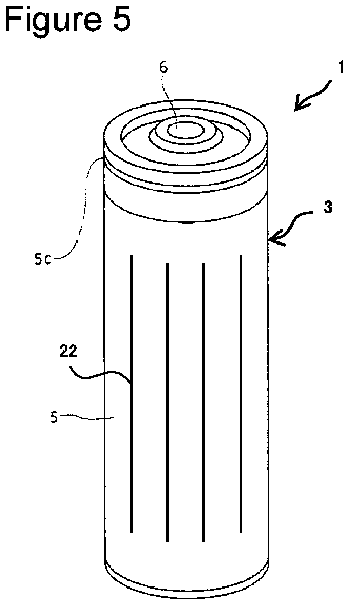

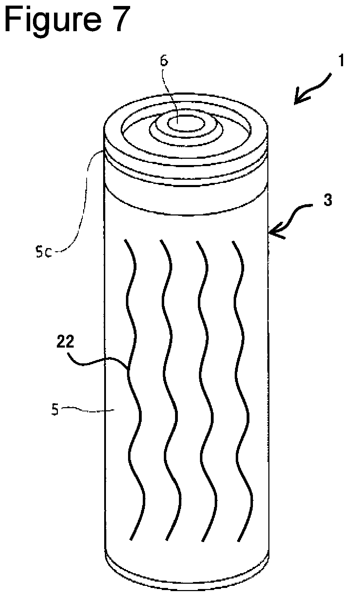

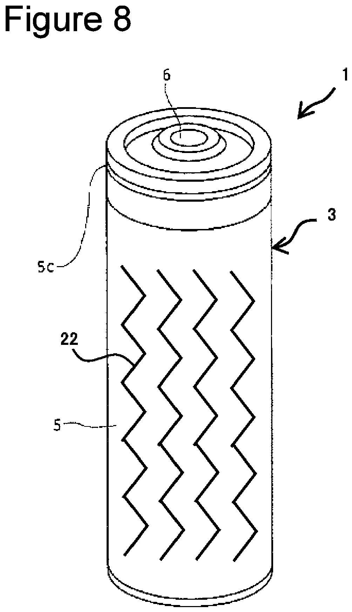

Alternatively, for example, the case body 5 may be irradiated with laser light at a predetermined interval over the entire circumference of the outside side surface of the case body 5 to form welded parts 22 between the stacked part 17 and the case body 5 at a predetermined interval over the entire circumference of the side surface of the case body 5. Examples of the shape of such welded parts 22 include linear shapes as illustrated in FIG. 5, wavy line shapes as illustrated in FIG. 7, and sawtooth shapes as illustrated in FIG. 8.

In the present embodiment, a negative electrode tab can be unnecessary as described above, but may be used. In the case of using a negative electrode tab, for example, one end of the negative electrode tab is desirably connected to the negative electrode current collector exposed part 14a, and the other end of the negative electrode tab is desirably connected to the bottom of the case body 5.

As the negative electrode current collector 14, for example, a foil of a metal, such as copper, that is stable in a potential range of the negative electrode 12 is used. The thickness of the negative electrode current collector 14 is, for example, preferably 4 µm or more and 40 µm or less, and more preferably 8 µm or more and 40 µm or less, for example, from the viewpoint of suppressing occurrence of damage to the stacked part 17 at the time of welding.

In the non-aqueous electrolyte secondary battery 1 according to the present embodiment, although the stacked part 17 including the negative electrode current collector exposed part 14b is described, the stacked part 17 can also be formed by attaching another metal foil to the negative electrode current collector exposed part 14b. That is, the metal foil included in the stacked part 17 is not limited to the negative electrode current collector 14. The negative electrode current collector exposed part 14b and another metal foil are preferably welded to each other. The stacked part 17 is preferably disposed on the entire circumference of the outermost periphery of the electrode assembly 2.

The negative electrode active material layer 16 includes, for example, a negative electrode active material, a binder, and the like.

The negative electrode active material is not particularly limited as long as it is a material capable of occluding and releasing lithium ions, and examples of the material that may be used include carbon materials such as graphite, non-graphitizable carbon, graphitizable carbon, fibrous carbon, coke, and carbon black, metals that alloy with Li, such as Si and Sn, metal compounds containing Si, Sn, or the like, and lithium-titanium composite oxides. From the viewpoint of increasing the capacity of the battery, the negative electrode active material preferably contains, for example, a carbon material and a Si material, and the ratio of the Si material to the total mass of the negative electrode active material is preferably 5.5 mass% or more. Examples of the Si material include SiOₓ (0.5 ≤ x ≤ 1.6).

Examples of the binder include fluorine-based resins, PAN, polyimide-based resins, acryl-based resins, polyolefin-based resins, styrene-butadiene rubber (SBR), nitrile-butadiene rubber (NBR), carboxymethyl celluloses (CMCs) and salts thereof, polyacrylic acid (PAA) and its salts (such as PAA-Na and PAA-K, that may include partially neutralized salts), and polyvinyl alcohol (PVA). These may be used singly or in combination of two or more kinds thereof.

The negative electrode 12 can be produced by, for example, preparing a negative electrode mixture slurry including a negative electrode active material, a binder, and the like, applying the negative electrode mixture slurry to the negative electrode current collector 14 excluding the region to be a negative electrode current collector exposed part, drying the applied slurry to form a negative electrode active material layer 16, and rolling the negative electrode active material layer.

The positive electrode 11 includes a positive electrode current collector 18 and a positive electrode active material layer 20 disposed on the positive electrode current collector 18. The positive electrode active material layer 20 is desirably disposed on both surfaces of the positive electrode current collector 18 as illustrated in FIG. 2. Although not illustrated in the drawings, for example, the positive electrode 11 has a positive electrode current collector exposed part in which the positive electrode active material layer 20 is not disposed on the positive electrode current collector 18 and the positive electrode current collector 18 is exposed. One end of a positive electrode tab is connected to the positive electrode current collector exposed part, and the other end is connected to the inner wall of the sealing assembly 6. Thus, the sealing assembly 6 serves as a positive electrode 11 terminal.

As the positive electrode current collector 18, a foil of a metal, such as aluminum, that is stable in a potential range of the positive electrode 11, a film in which the metal is disposed on its surface layer, or the like can be used.

The positive electrode active material layer 20 includes, for example, a positive electrode active material, a binder, a conductive agent, and the like.

Examples of the positive electrode active material include lithium-transition metal oxides containing a transition metal element such as Co, Mn, or Ni. Examples of the lithium-transition metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (M: at least one of Na, Mg, Sc, Y, Mn, Fe, Co, Ni, Cu, Zn, Al, Cr, Pb, Sb, or B, 0 < x ≤ 1.2, 0 < y ≤ 0.9, 2.0 ≤ z ≤ 2.3). These may be used singly or in combination of two or more kinds thereof. The positive electrode active material preferably includes a lithium-nickel composite oxide such as LiₓNiO₂, LiₓCo_{y}Ni_{1-y}O₂, or LiₓNi_{1-y}M_{y}O_{z} (M; at least one of Na, Mg, Sc, Y, Mn, Fe, Co, Ni, Cu, Zn, Al, Cr, Pb, Sb, or B, 0 < x ≤ 1.2, 0 < y ≤ 0.9, 2.0 ≤ z ≤ 2.3) from the viewpoint of being able to increase the capacity of the battery.

Examples of the conductive agent include carbon-based particles such as carbon black (CB), acetylene black (AB), Ketjenblack, and graphite. These may be used singly or in combination of two or more kinds thereof.

Examples of the binder include fluorine-based resins such as polytetrafluoroethylene (PTFE) and polyvinylidene fluoride (PVdF), polyacrylonitrile (PAN), polyimide-based resins, acryl-based resins, and polyolefin-based resins. These may be used singly or in combination of two or more kinds thereof.

The positive electrode 11 can be produced by, for example, applying a positive electrode mixture slurry including a positive electrode active material, a binder, a conductive agent, and the like to the positive electrode current collector 18, drying the applied slurry to form a positive electrode active material layer 20, and then rolling the positive electrode active material layer 20.

As the separator, for example, a porous sheet having an ion permeation property and an insulating property is used. Specific examples of the porous sheet include fine porous thin films, woven fabrics, and nonwoven fabrics. As a material of the separator, olefin-based resins such as polyethylene and polypropylene, cellulose, and the like are suitable. The separator may be a stacked body having a cellulose fiber layer and a thermoplastic resin fiber layer such as an olefin-based resin. The separator may be a multilayer separator including a polyethylene layer and a polypropylene layer, and a separator may be used that has a surface to which a material such as an aramid-based resin or a ceramic is applied.

The non-aqueous electrolyte includes, for example, an electrolyte salt and a non-aqueous solvent that dissolves the electrolyte salt. The electrolyte salt is preferably a lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 < x < 6, n is 1 or 2), LiB₁₀Cl₁₀, LiCl, LiBr, LiI, chloroborane lithium, lower aliphatic lithium carboxylates, and borates such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) {l and m are integers of 0 or more}. These lithium salts may be used singly or in combination of two or more kinds thereof. Among these lithium salts, LiPF₆ is preferably used from the viewpoint of ion conductivity, electrochemical stability, and the like. The concentration of the lithium salt is preferably 0.8 to 1.8 mol in 1 L of the non-aqueous solvent.

Examples of a solvent that can be used as the non-aqueous solvent include esters, ethers, nitriles such as acetonitrile, amides such as dimethylformamide, and mixed solvents of two or more thereof. The non-aqueous solvent may contain a halogen-substituted solvent in which at least a part of hydrogen in a solvent described above is substituted with a halogen atom such as fluorine.

Examples of the esters include cyclic carbonic acid esters such as ethylene carbonate (EC), propylene carbonate (PC), and butylene carbonate, chain carbonic acid esters such as dimethyl carbonate (DMC), ethyl methyl carbonate (EMC), diethyl carbonate (DEC), methyl propyl carbonate, ethyl propyl carbonate, and methyl isopropyl carbonate, cyclic carboxylic acid esters such as γ-butyrolactone and γ-valerolactone, and chain carboxylic acid esters such as methyl acetate, ethyl acetate, propyl acetate, methyl propionate (MP), and ethyl propionate.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ethers, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

As the halogen-substituted solvent, an ester is preferably used such as a fluorinated cyclic carbonic acid ester such as fluoroethylene carbonate (FEC), a fluorinated chain carbonic acid ester, or a fluorinated chain carboxylic acid ester such as methyl fluoropropionate (FMP).

### REFERENCE SIGNS LIST

- 1: Non-aqueous electrolyte secondary battery
- 2: Electrode assembly
- 2a: Winding end
- 3: Battery case
- 5: Case body
- 5c: Groove
- 6: Sealing assembly
- 11: Positive electrode
- 12: Negative electrode
- 14: Negative electrode current collector
- 14a, 14b: Negative electrode current collector exposed part
- 16: Negative electrode active material layer
- 17: Stacked part
- 18: Positive electrode current collector
- 20: Positive electrode active material layer
- 22: Welded part

## Claims

1. A secondary battery comprising:
a metallic case body having an opening;
a sealing assembly sealing the opening of the metallic case body; and
an electrode assembly housed in the metallic case body, the electrode assembly including a positive electrode, a negative electrode, and a separator, the positive electrode and the negative electrode that are wound with the separator interposed between the positive electrode and the negative electrode,
the negative electrode including a negative electrode current collector and a negative electrode active material layer formed on the negative electrode current collector, the negative electrode having an exposed part in which the negative electrode active material layer is not formed and the negative electrode current collector is exposed,
the exposed part disposed at a winding end of the negative electrode,
the electrode assembly having a stacked part in which metal foils including the exposed part are stacked,
the stacked part welded to the metallic case body.

2. The secondary battery according to claim 1, wherein the stacked part is disposed in an entire circumference of an outermost periphery of the electrode assembly.

3. The secondary battery according to claim 1, wherein the stacked part includes the exposed part forming more than one turn in a direction from the winding end to a winding start of the electrode assembly.

4. The secondary battery according to claim 3, wherein the exposed part forms two or more turns in the direction from the winding end to the winding start of the electrode assembly.

5. The secondary battery according to claim 2 or 4, wherein the stacked part is welded to the metallic case body continuously over an entire circumference of a side surface of the metallic case body.

6. The secondary battery according to any one of claims 1 to 5, wherein the stacked part has a thickness of 20 µm or more and 200 µm or less.
